# EUROPÄISCHE PATENTSCHRIFT

(11) **EP 4 259 353 B1**
(45) Veröffentlichungstag und Bekanntmachung des Hinweises auf die Patenterteilung: **06.08.2025**
(21) Anmeldenummer: 21836424.8
(22) Anmeldetag: 09.12.2021
(51) Int. Cl.: B21C 23/14, B21C 23/18, B21C 23/22, B21C 27/00, B21C 31/00, B30B 11/22, B30B 11/26, B29C 48/48, B29C 48/49, B30B 15/30

(54) **VERFAHREN ZUM HERSTELLEN EINES STRANGPRESSPRODUKTS**
METHOD FOR PRODUCING AN EXTRUDED PRODUCT
PROCÉDÉ DE FABRICATION D'UN PRODUIT EXTRUDÉ

(30) Priorität: 11.12.2020 EP 20213455
(43) Veröffentlichungstag der Anmeldung: 18.10.2023
(73) Patentinhaber: Technische Universität Berlin, 10623 Berlin (DE)
(72) Erfinder: MÜLLER, Sören, 12169 Berlin (DE); NITSCHKE, René, 10249 Berlin (DE); GALL, Sven, 12169 Berlin (DE); GENSCH, Felix, 16540 Hohen Neuendorf (DE)
(74) Vertreter: Bittner, Thomas L.
(86) Internationale Anmeldenummer: PCT/EP2021/085042
(87) Internationale Veröffentlichungsnummer: WO 2022/122950

(56) Entgegenhaltungen:
- JP-A- H0 760 340
- JP-A- H04 157 014
- US-A- 368 314
- US-A1- 2004 074 275

## Beschreibung

Die Erfindung bezieht sich auf ein Verfahren zum Herstellen eines Strangpressprodukts.

### Hintergrund

Das Strangpressen stellt im Bereich der Massivumformung eine energieeffiziente Möglichkeit dar, aus Vormaterial mittels nur eines Umformschritts als Strangpressprodukt insbesondere endkonturnahe Halbzeuge herzustellen. Verschiedene Werkstoffe können verarbeitet werden. Neben Leichtmetallen wie Aluminium, Magnesium und Titan lassen sich zum Beispiel auch Eisenmetalle, Buntmetalle und Edelmetalle sowie deren Legierungen in Form bringen. Die Prozesstemperaturen können hierbei bis zu etwa 1300 °C betragen, können aber auch unterhalb 0 °C liegen. Das Verfahren ermöglicht es, engste Formtoleranzen einzuhalten und darüber hinaus über die Mikrostruktur die chemischen und physikalischen Eigenschaften der Pressprodukte den spezifischen Anforderungen der Endprodukte anzupassen. Als Ausgangmaterial eignen sich außer Gussvormaterial beispielweise auch Schmiedezwischenprodukte und Pulverwerkstoffe.

Den immer umfangreicheren Anforderungsprofilen für Struktur- und Funktionsbauteile sowohl im Automotive- als auch im Transport-, Energie-, Medizin- und Luftfahrtbereich wird zunehmend mit belastungsangepassten Konzepten begegnet. Dazu gehören neben querschnittsoptimierten Geometrien auch vermehrt Hybridkonzepte, in denen unterschiedliche Werkstoffe oder Legierungen lokale Anwendung im Bauteil finden. Allen diesen Konzepten gemein ist die Notwendigkeit eines zusätzlichen Fügeprozesses für die Herstellung einer stoff-, kraft- oder formschlüssigen Verbindung. Diese findet entweder vor oder im Anschluss an die endkonturnahe Formgebung statt.

Um Metalle stoffschlüssig miteinander zu verbinden, müssen die reinen Metalloberflächen einander bis auf einen Atomabstand angenähert werden. Hierbei müssen sowohl ein ausreichend hoher Druck als auch eine ausreichend hohe Temperatur herrschen, um die Oberflächenrauheit einzuebnen und die nötige Annäherung zu erzeugen sowie die für die chemische Bindung notwendigen Diffusionsvorgänge zu ermöglichen. Da Metalloberflächen im Allgemeinen mit Verunreinigungen und Oxiden belegt sind, müssen die "reinen" Oberflächen zunächst freigelegt werden, um eine Verbindung auf atomarer Ebene erzeugen zu können. Damit dies gelingt, müssen die Berührungsflächen der beiden Metallvolumina in hinreichendem Maße vergrößert werden. Die Deckschichten dürfen sich jedoch nicht bzw. im Verhältnis zur Berührungsfläche nur in sehr geringem Maß vergrößern.

Eine Möglichkeit die Oberflächen von Fügepartnern aufzureißen besteht darin, diese unter Einfluss von Normalspannungen aneinander zu scheren. Hierbei wird die Oberfläche durchgeknetet und dadurch vergrößert, wodurch die Verunreinigungen und Oxide aufreißen, so dass die reine Metalloberfläche freigelegt wird. In Abhängigkeit von der Höhe der eingebrachten Scherung lassen sich einerseits die Verunreinigungen und Oxide stark zerkleinern und andererseits die Oberfläche signifikant vergrößern.

Das Strangpressen bietet grundsätzlich die Möglichkeit, getrennte Materialströme während der Formgebung miteinander zu "verpressen" und dadurch im Strangpressprodukt eine Fügeverbindung, die sogenannte Strangpressnaht bzw. Pressnaht, zu erzeugen. Die hierfür nötigen Temperaturen und Drücke sowie eine ausreichende Scherung kann mittels Strangpressprozess eingebracht werden. Auf diese Weise lassen sich unterschiedliche Werkstoffe und Legierungen während des Strangpressens verbinden. In verschiedenen Arbeiten wurde das Strangpressen von Verbunden aus unterschiedlichen metallischen Materialien untersucht und der Einfluss der Prozessgrößen auf die Verbundeigenschaften dargestellt. Auch am Forschungszentrum Strangpressen wurden in der Vergangenheit Untersuchungen zum Strangpressen von Werkstoffverbunden durchgeführt (vgl. Negendank et al., J. Mater Process Tech 212, 2012, 1954; Negendank et al., Key Enginneering Materials 554-557, 2013, 767; Nitschke et al., Magnesium - 10th International Conference on Magnesium alloys and their applications (Editor: K.U. Kainer), 2015, 478). Dabei konnte gezeigt werden, dass sich Werkstoffverbunde mit Hilfe verschiedener Verfahrensvarianten des Strangpressens herstellen lassen.

Werkstoffverbunde können mittels des Verfahrens des hydrostatischen Strangpressens mit Anwendung eines Wirkmediums hergestellt werden (vgl. Ruppin et al., Aluminium 56, 1980, 523). Hierdurch lässt sich der direkte Kontakt und damit Festkörperreibung zwischen Bolzen, Aufnehmer und Pressstempel verhindern oder vermindern (vgl. Bauser et al., Strangpressen, Aluminium-Verlag, Düsseldorf, 2001). Aus diesem Grund weist das Verfahren einen nahezu idealen Materialfluss auf und ermöglicht beispielsweise die Herstellung von zum Beispiel Cu / Al-Verbunden oder Cu / Nb3Sn-Supraleitern. Der verfahrenstechnisch bedingte Aufwand für die Bolzenvorbereitung (geometrische Anpassung der Bolzenvorderseite zur Abdichtung des Aufnehmerinhaltes in Richtung Matrize) sowie die Versuchsdurchführung (Füllung des Aufnehmers mit dem Hydrostatikmedium, Abdichten und entnehmen nach dem Pressvorgang) sind jedoch sehr arbeits-, zeit- und kostenintensiv.

Beim Verbundstrangpressen können zylindrische Multi-Material-Bolzen zum Einsatz kommen. Zum Beispiel lassen sich Magnesiumhybride durch Strangpressen formen und fügen. Allerdings führt das Pressen von Legierungspaarungen mit signifikanten Unterschieden in den Umformwiderständen zu erheblichen Schwierigkeiten beim Einstellen eines homogenen Materialflusses, was zu einem ausgeprägten Verzug im Profil führt bis hin zur Degradation des Profils im Bereich der Pressnaht. Ferner können starke Drehungen und Verschiebungen der Grenzfläche relativ zum Profilquerschnitt auftreten. Diese Effekte können von den jeweiligen Volumenanteilen und der Lage der Bolzenteile abhängen (vgl. Nitschke et al., Magnesium - 10th International Conference on Magnesium alloys and their applications (Editor: Kainer), 2015, 478).

In Verbindung mit dem koaxialen Strangpressen von Aluminium-Magnesiumverbunden wurde gezeigt, dass mittels Strangpressen Verbunde aus Magnesium und Aluminium geformt und gefügt werden können (vgl. Negendank et al., J.Mater Process Tech 212, 2012, 1954; Negendank et al., Key Enginneering Materials 554-557, 2013, 767).

Das Dokument US 2004 / 074275 A1 beschreibt eine Extruderbiegemaschine, die ein Produkt durch Extrudieren von zwei oder mehr Roheisen biegen kann. Die Maschine besteht aus einem Extrusionswerkzeughalter, der mit konischen Werkzeugen ausgestattet ist, Behälterhalter, der den Behälter mit zwei oder mehr Löchern mit konischem Stopfen erwärmt, zwei oder mehr Extrusionsschäfte, Hydraulikaggregat, Relativgeschwindigkeitssteuereinheit und Tragrahmenstruktur. Wenn zwei oder mehr Roheisenbarren in einem konischen Formhohlraum zusammengeschweißt und am Formausgang zu einem Produkt extrudiert werden, kann die Extruderbiegemaschine das extrudierte Teil aufgrund der relativen Bewegungsgeschwindigkeit der zwei oder mehr Extrusionsschäften gleichzeitig während des Extrudierens mit dem Gradienten der Extrusionsgeschwindigkeiten biegen.

In dem Dokument JP H04-157014 A, welches die Basis für den Oberbegriff des Anspruchs 1 bildet, ist eine Vorrichtung zum Strangpressen offenbart, bei der in entsprechende Aufnahmelöcher Werkstoffbolzen aus unterschiedlichen Materialien eingesetzt werden. Mittels eines Stempels werden Pressstempel bewegt, welche die Werkstoffe durch ein Formwerkzeug pressen, wobei diese druckverschweißt werden.

Das Dokument US 368,314 A betrifft eine Vorrichtung zum Herstellen von gebogenen Rohren aus einem Plastikmaterial.

Aus dem Dokument JP H07-60340 A ist eine Strangpressvorrichtung bekannt, bei der Material mittels mehrerer Pressstempel aus zugeordneten Aufnahmebohrungen durch ein Formwerkzeug gepresst wird.

### Zusammenfassung

Aufgabe der Erfindung ist es, ein Verfahren zum Herstellen eines Strangpressprodukts zu schaffen, mit denen Strangpressprodukte effizienter und variabler herstellbar sind.

Zur Lösung ist ein Verfahren zum Herstellen eines Strangpressprodukts nach dem unabhängigen Anspruch 1 geschaffen. Ausgestaltungen sind Gegenstand von abhängigen Unteransprüchen.

Nach einem Aspekt ist ein Verfahren zum Herstellen eines Strangpressprodukts geschaffen. Hierbei wird eine Strangpressvorrichtung bereitgestellt, die Folgendes aufweist: einen Aufnehmer; eine erste Aufnehmerbohrung, die in dem Aufnehmer gebildet und in der ein erster Pressstempel angeordnet ist; eine zweite Aufnehmerbohrung, die in dem Aufnehmer getrennt von der ersten Aufnehmerbohrung gebildet und in der ein zweiter Pressstempel angeordnet ist; und ein Formwerkzeug mit einem Formhohlraum, welcher mit der ersten und der zweiten Aufnehmerbohrung verbunden ist. Bei dem Verfahren ist weiterhin Folgendes vorgesehen: Anordnen eines ersten Werkstoffbolzens aus einem ersten Werkstoff in der ersten Aufnehmerbohrung; Anordnen eines zweiten Werkstoffbolzens aus einem zweiten Werkstoff, welcher von dem ersten Werkstoff verschieden ist, in der zweiten Aufnehmerbohrung; und Strangpressen eines Strangpressprodukts, bei dem der erste und der zweite Werkstoff form- und stoffschlüssig verbunden sind. Das Strangpressen umfasst hierbei weiterhin Folgendes: Vorschieben des ersten Pressstempels in der ersten Aufnehmerbohrung, derart, dass hierdurch der erste Werkstoff in den Formhohlraum des Formwerkzeugs gepresst und hierbei umgeformt wird; Vorschieben des zweiten Pressstempels in der zweiten Aufnehmerbohrung, derart, dass hierdurch der zweite Werkstoff in den Formhohlraum des Formwerkzeugs gepresst und hierbei umgeformt wird; und stoff- und formschlüssiges Verbinden des ersten und des zweiten Werkstoffs zu einem Strangpressprodukt in dem Formwerkzeug. Ein erster Vorschub beim Vorschieben des ersten Pressstempels in der ersten Aufnehmerbohrung und ein zweiter Vorschub beim Vorschieben des zweiten Pressstempels in der zweiten Aufnehmerbohrung werden unabhängig voneinander geregelt.

Eine Vorrichtung zur Nutzung des Verfahrens zum Herstellen eines Strangpressprodukts kann Folgendes aufweisen: einen Aufnehmer; eine erste Aufnehmerbohrung, die in dem Aufnehmer gebildet und in der ein erster Pressstempel angeordnet ist; eine zweite Aufnehmerbohrung, die in dem Aufnehmer getrennt von der ersten Aufnehmerbohrung gebildet und in der ein zweiter Pressstempel angeordnet ist; und ein Formwerkzeug mit einem Formhohlraum, welcher mit der ersten und der zweiten Aufnehmerbohrung in Verbindung steht, derart, dass beim Strangpressen mittels Vorschieben des ersten Pressstempels in der ersten Aufnehmerbohrung und Vorschieben des zweiten Pressstempels in der zweiten Aufnehmerbohrung ein erster Werkstoff eines ersten Werkstoffbolzens aus der ersten Aufnehmerbohrung und ein zweiter Werkstoff eines zweiten Werkstoffbolzens, welcher von dem ersten Werkstoff verschieden ist, aus der zweiten Aufnehmerbohrung zum Herstellen eines Strangpressprodukts, bei dem der erste und der zweite Werkstoff form- und stoffschlüssig verbunden sind, in dem Formhohlraum einbringbar ist. Hierbei sind ein erster Vorschub beim Vorschieben des ersten Pressstempels in der ersten Aufnehmerbohrung und ein zweiter Vorschub beim Vorschieben des zweiten Pressstempels in der zweiten Aufnehmerbohrung unabhängig voneinander regelbar.

Das Vorsehen der mindestens zwei Pressstempel, die in voneinander getrennten Aufnehmerbohrungen angeordnet sind, ermöglicht es, die Pressstempel beim Strangpressen unabhängig voneinander zu betreiben, um mittels Vorschub den jeweiligen Werkstoff in dem Formwerkzeug einzubringen.

Die Bewegung der Pressstempel beim Vorschieben erfolgt regelmäßig in axialer Richtung der Aufnehmerbohrung. Die Aufnehmerbohrungen können endseitig direkt an den Formhohlraum des Formwerkzeugs koppeln, so dass der Werkstoff aus einem Ausgang des Presskanal der Aufnehmerbohrung direkt in einen Eingang des Formhohlraums gelangt. Die Aufnehmerbohrungen bilden jeweils einen Hohlraum, in welchem der Werkstoff mit Pressdruck beaufschlagt wird, um diesen aus der Aufnehmerbohrung in das Formwerkzeug einzubringen und hierbei umzuformen.

Die Aufnehmerbohrungen können mit einer Zylinderform gebildet sein.

Beim Strangpressen werden die Werkstoffe in dem Formwerkzeug entlang einer Fügeverbindung (Fügenaht) stoff- und formschlüssig verbunden.

Bei den Werkstoffen kann es sich um metallische Werkstoffe unterschiedlicher Art handeln, zum Beispiel Aluminium oder Magnesium.

Die Ausbildung getrennter Aufnehmerbohrungen mit jeweiligem Pressstempel ermöglicht voneinander entkoppelte Vorschubbewegungen der Pressstempel in den Aufnehmerbohrungen.

Das stoff- und formschlüssige Verbinden kann in dem Formwerkzeug zwischen dem ersten und dem zweiten Werkstoff ausgeführt werden. Mittels der aufeinander entkoppelten Vorschubbewegung der Pressstempel in den getrennten Aufnehmerbohrungen kann die Spannung zwischen dem ersten und dem zweiten Werkstoff in dem Formhohlraum eingestellt und variiert werden.

Der erste und der zweite Werkstoff können mit unterschiedlicher Fließgeschwindigkeit in dem Formhohlraum eingebracht werden. Die Einstellbarkeit unterschiedlicher Fließgeschwindigkeiten ermöglicht eine Anpassung des Strangpressprozesses an unterschiedliche Werkstoffe. Auch kann der Herstellungsprozess so für die Anforderungen bei verschiedenen Strangpressprodukten optimiert werden. In einer alternativen Prozessführung können der erste und zweite Werkstoff mit im Wesentlichen gleicher Fließgeschwindigkeit in dem Formhohlraum eingebracht werden.

Die voneinander entkoppelte Einstell- oder Regelbarkeit des Vorschubs der Pressstempel in den getrennten Aufnehmerbohrungen ermöglicht eine individuelle Anpassung des Strangpressprozesses an verschiedene Prozessführungen, beispielweise in Abhängigkeit von den Werkstoffen und / oder dem herzustellenden Strangpressprodukt.

Das Vorschieben des ersten Pressstempels in der ersten Aufnehmerbohrung kann mit einer ersten Vorschubgeschwindigkeit und das Vorschieben des zweiten Pressstempels in der zweiten Aufnehmerbohrung kann mit einer zweiten Vorschubgeschwindigkeit ausgeführt werden, die von der ersten Vorschubgeschwindigkeit verschieden ist. Mittels unterschiedlicher Vorschubgeschwindigkeiten können insbesondere die Fließgeschwindigkeiten für die Werkstoffe beim Übergang aus der Aufnehmerbohrung in den Formhohlraum des Formwerkzeugs eingestellt werden.

Der erste Pressstempel kann beim Bewegen in der ersten Aufnehmerbohrung mittels eines ersten Aktors und der zweite Pressstempel kann beim Bewegen in der zweiten Aufnehmerbohrung mittels eines zweiten Aktors angetrieben werden, welcher getrennt von dem ersten Aktor gebildet und steuerbar ist. Alternativ kann vorgesehen sein, die Presstempel mit einem Aktor zu betätigen, der den Pressstempeln gemeinsam zugeordnet ist. Der gemeinsame Aktor kann entkoppelte Aktorelemente aufweisen, die eine entkoppelte Vorschubbewegung der Presstempel bewirken können.

Als zweiter Werkstoff wird ein Werkstoff verwendet, welcher von dem ersten Werkstoff verschieden ist. Beispielsweise können verschiedene metallische Werkstoffe zum Einsatz kommen.

Als Strangpressprodukt kann ein Strangpressprofil hergestellt werden. Das Strangpressprofil kann mit beliebigen Profilquerschnitten hergestellt werden. Mittels des Verfahrens lassen sich Strangpressprofile mit axial veränderlichen Volumenanteilen unterschiedlicher Werkstoffe herstellen. Darüber hinaus lassen sich mit geeigneten Matrizenkonstruktionen Strangpressprodukte mit axial veränderlichem Querschnitt und gleichzeitig axial veränderlichen Volumenanteilen unterschiedlicher Werkstoffe herstellen.

Es kann eine Strangpressvorrichtung bereitgestellt sein, bei der quer zur jeweiligen Vorschubrichtung die erste Aufnehmerbohrung einen ersten Querschnitt und die zweite Aufnehmerbohrung einen zweiten Querschnitt aufweist, welcher von dem ersten Querschnitt verschieden ist. Die Aufnehmerbohrungen können bei dieser oder anderen Ausführungsformen mit runden, eckigen oder ovalen Querschnitt gebildet sein, insbesondere kreisrund oder verschiedene von kreisrund.

Alternativ kann eine Strangpressvorrichtung bereitgestellt werden, bei der quer zur jeweiligen Vorschubrichtung die erste Aufnehmerbohrung den ersten Querschnitt und die zweite Aufnehmerbohrung den zweiten Querschnitt aufweist, welcher gleich dem ersten Querschnitt ist. Die Gleichheit oder Unterschiedlichkeit der Querschnitte kann sich zum Beispiel auf die Gesamtfläche des Querschnitts und / oder die Form der Querschnittsfläche beziehen. Auch eine Identität der Querschnitte kann vorgesehen sein, also eine Gleichheit sämtlicher Querschnittseigenschaften.

Es kann eine Strangpressvorrichtung bereitgestellt oder verwendet werden, bei der quer zur jeweiligen Vorschubrichtung die erste Aufnehmerbohrung einen ersten kreisrunden Querschnitt und die zweite Aufnehmerbohrung einen zweiten kreisrunden Querschnitt aufweist.

Es kann eine Strangpressvorrichtung bereitgestellt werden, bei der die erste Aufnehmerbohrung und die zweite Aufnehmerbohrung gegeneinander abgedichtet sind. Die Aufnehmerbohrungen können hierbei fluiddicht gegeneinander abgedichtet sein, insbesondere Flüssigkeitsdicht.

Die Aufnehmerbohrungen bilden eine jeweilige Aufnahme für den Pressstempel (Stempelaufnahme).

Die vorangehend in Verbindung mit dem Verfahren zum Herstellen eines Strangpressprodukts erläuterten Ausgestaltungen können in Verbindung mit der Vorrichtung zum Herstellen des Strangpressprodukts entsprechend vorgesehen sein.

Mittels der vorgeschlagenen Technik kann in einer Ausgestaltung vorgesehen sein, dass die einzelnen Materialströme den Formhohlraum homogen speisen, sodass innerhalb des Formhohlraums und im Bereich des Presskanals möglichst wenig Scherung in Pressrichtung erzeugt wird. Hierdurch lassen sich die Kontaktschubspannungen und auch die axialen Dehnungsdifferenzen zwischen den Werkstoffpartnern beim Fügeprozess minimieren. Es wird eine homogene Strangaustrittsgeschwindigkeit über den gesamten Querschnitt erzielt und eine schädigende Scherung im Bereich der Grenzschicht wird verhindert. In anderen Worten bedeutet das, dass Materialströme mit gleicher Fließgeschwindigkeit in dem Formhohlraum zusammengebracht und diese durch einen Mindestdruck aneinander pressbar sind, um ein stoffschlüssiges Hybrid zu erzeugen.

So können in einer Ausführungsform lokal gleich schnelle Materialströme mit unterschiedlichen Pressmaterialien realisiert werden, welche abweichende Umformwiderstände und Prozessfenster aufweisen. Bei der Anwendung einer klassischen Strangpresse mit nur einem Pressstempel ist dies nicht realisierbar Insbesondere ist es bei der Anwendung der klassischen Strangpresse mit nur einem Pressstempel nicht möglich, den Druck in den Bereichen primäre Umformzone, Schweißkammer und Presskanal auf gleichem Niveau einzustellen, um die Grenzschichtverschiebung zu verhindern.

Es kann vorgesehen sein, beim Herstellen des Strangpressprodukts den Querschnitt von stranggepressten Verbundprofilen entsprechend den im Einsatz vorherrschenden Belastungen auf Bauteile und Komponenten lokal anzupassen. Beispielsweise kann vorgesehen sein, die Wandstärke eines für eine Lastaufnahme beim Strangpressprodukt verantwortlichen Werkstoffs in ersten Bereichen dickwandiger auszuführen als in schwächer belasteten Regionen (zweite Bereiche, die von den ersten Bereichen verschieden sind), die dann mit einer geringeren Wandstärke ausgeführt werden. Die Entwicklung von belastungsangepassten, maßgeschneiderten Profilen kann das Gewicht von stranggepressten Komponenten oder Bauteilen gegenüber solchen, die über den konventionellen Herstellungsprozess erzeugt wurden, vermindern.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Vorrichtung zum Herstellen eines Strangpressprodukts;
- Fig. 2: eine perspektivische Darstellung eines Aufnehmers für eine Strangpressvorrichtung, bei dem ein erster und ein zweiter Presstempel in einer ersten und einer zweiten Aufnehmerbohrung angeordnet sind;
- Fig. 3: eine schematische perspektivische Darstellung einer Anordnung mit zwei Pressstempeln zum Pressen von Werkstoffbolzen mit gleichen Vorschubgeschwindigkeiten;
- Fig. 4: eine schematische perspektivische Darstellung einer Anordnung mit zwei Pressstempeln zum Pressen von Werkstoffbolzen mit unterschiedlichen Vorschubgeschwindigkeiten und
- Fig. 5: eine schematische Darstellung eines Formwerkzeugs von vorn.

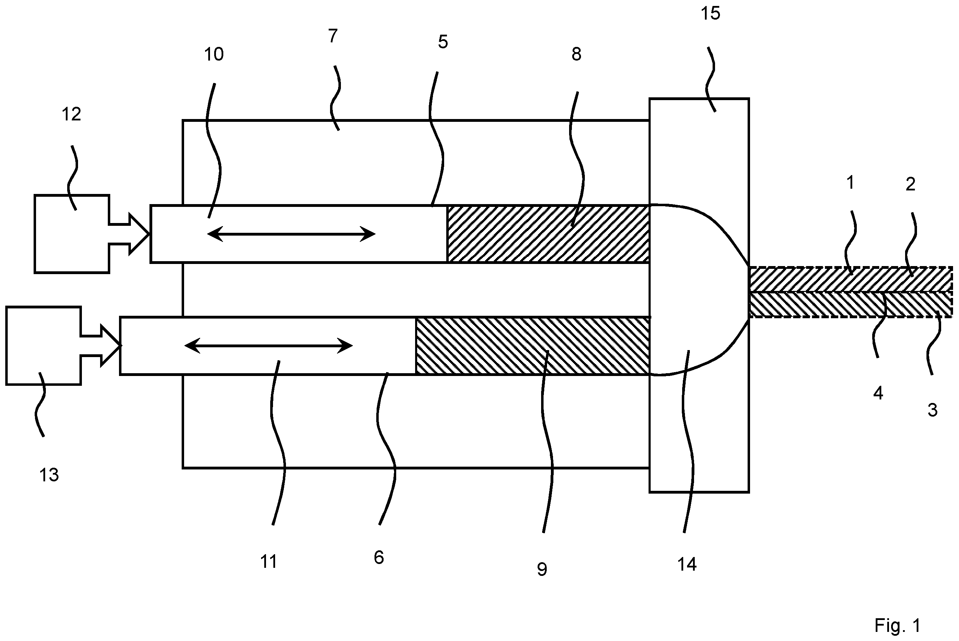

Fig. 1 zeigt eine schematische Darstellung einer Vorrichtung zum Herstellen eines Strangpressprodukts 1, bei dem ein erster Werkstoff 2 und ein zweiter Werkstoff 3 entlang einer Fügeverbindung oder -naht 4 form- und stoffschlüssig mittels Strangpressen miteinander verbunden sind. Bei dem Strangpressprodukt 1 kann es sich um ein Strangpressprofil handeln.

Die Formulierung "Strangpressprofil" in der hier verwendeten Bedeutung umfasst alle mit Hilfe des Strangpressprozesses herstellbaren Profilgeometrien. Hierzu zählen zum Beispiel sowohl Vollprofile als auch Hohlprofile sowie Halbhohlprofile in beliebigen Geometrien. So sind als Strangpressprofile beispielweise stranggepresste "Bleche" ebenso wie Rohre, Fensterprofile oder Rundstangen bekannt.

Zum Herstellen des Strangpressprodukts 1 sind in einer ersten und einer zweiten Aufnehmerbohrung 5, 6 eines Aufnehmers 7 ein erster Werkstoffbolzen 8 aus dem ersten Werkstoff 2 und ein zweiter Werkstoffbolzen 9 aus dem zweiten Werkstoff 3 angeordnet. Die erste und die zweite Aufnehmerbohrung 5, 6 stellen einen jeweiligen Hohlraum mit einer Zylinderform zur Verfügung, der einen runden, eckigen oder ovalen Querschnitt aufweisen kann. In den Aufnehmerbohrungen 5, 6 sind ein erster und ein zweiter Pressstempel 10, 11 angeordnet, die jeweils in axialer Richtung in der zugeordneten Aufnehmerbohrung 5, 6 verschiebbar sind.

Dem ersten und dem zweiten Pressstempel 10, 11 sind ein erster und ein zweiter Aktor 12, 13 zugeordnet, welche eingerichtet sind, den jeweiligen Pressstempel 10, 11 mit Kraft zu beaufschlagen, so dass die Pressstempel 10, 11 eine Vorschubbewegung in Richtung eines Formhohlraums 14 eines Formwerkzeugs 15 ausführen, um so den ersten und den zweiten Werkstoff 2, 3 in dem Formhohlraum 14 einzubringen. Hierzu stehen die erste und die zweite Aufnehmerbohrung 5, 6 mit dem Formhohlraum 14 in Verbindung, derart, dass das Material des ersten und des zweiten Werkstoffbolzens 8, 9 in dem Formhohlraum 14 eingebracht und hierbei umgeformt wird. Die Druckbeaufschlagung führt dazu, dass in dem Formhohlraum 14 die Fügeverbindung 4 zwischen den ersten und dem zweiten Werkstoff 2, 3 ausgebildet wird.

Mit Hilfe des ersten und des zweiten Aktors 12, 13, können der erste und der zweite Pressstempel 10, 11 voneinander entkoppelte Vorschubbewegungen beim Strangpressen ausführen. Insbesondere können sich die Pressstempel 10, 11 mit unterschiedlicher Geschwindigkeit beim Vorschub bewegen. Mit Hilfe der unabhängigen Einstellung der beiden Vorschubbewegungen ist es ermöglicht, für den Übergang des ersten und des zweiten Werkstoffs 2, 3 in den Formhohlraum 14 unterschiedliche Fließgeschwindigkeiten einzustellen. Der erste und der zweite Werkstoff 2, 3 können zum Beispiel unterschiedliche metallische Werkstoffe sein, aber auch die Verwendung gleicher metallischer Werkstoffe für die beiden Werkstoffbolzen 8, 9 kann vorgesehen sein. Das erzeugte Strangpressprodukt 1 kann ein Strangpressprofil sein.

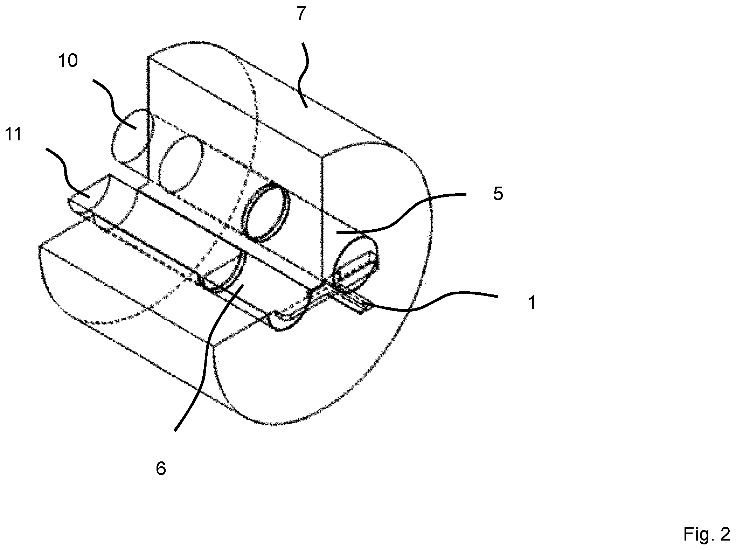

Weitere Ausführungsbeispiele werden nachfolgend unter Bezugnahme auf die Fig. 2 bis 5 erläutert. Für gleiche Merkmale werden die gleichen Bezugszeichen wie in Fig. 1 verwendet.

Fig. 2 zeigt eine schematische Darstellung einer Anordnung für eine Strangpressvorrichtung, bei der in der ersten und der zweiten Aufnehmerbohrung 5, 6 Pressstempel 10, 11 mit unterschiedlichem Querschnitt angeordnet sind. Während der erste Pressstempel 10 einen runden Querschnitt aufweist, ist der zweite Pressstempel 11 mit einem eckigen (flachen) Querschnitt vorgesehen. Entsprechend weisen die erste und die zweite Aufnehmerbohrung 5, 6 einen runden und einen eckigen Querschnitt auf. In den verschiedenen Ausführungsformen sind die Pressstempel 10, 11 formschlüssig in der zugeordneten Aufnehmerbohrung 5, 6 angeordnet. Gemäß Fig. 2 verfügen dann auch die Werkstoffbolzen 8, 9 über einen runden sowie einen eckigen Querschnitt.

Eine formschlüssige Abdichtung kann mittels einer zwischen Pressstempel 10, 11 und Werkstoffbolzen 8, 9 positionierte sogenannte "Pressscheibe" (nicht dargestellt). Diese findet sowohl fest - im Sinne von "konstruktiv temporär miteinander verbunden, jedoch austauschbar" - als auch lose Verwendung.

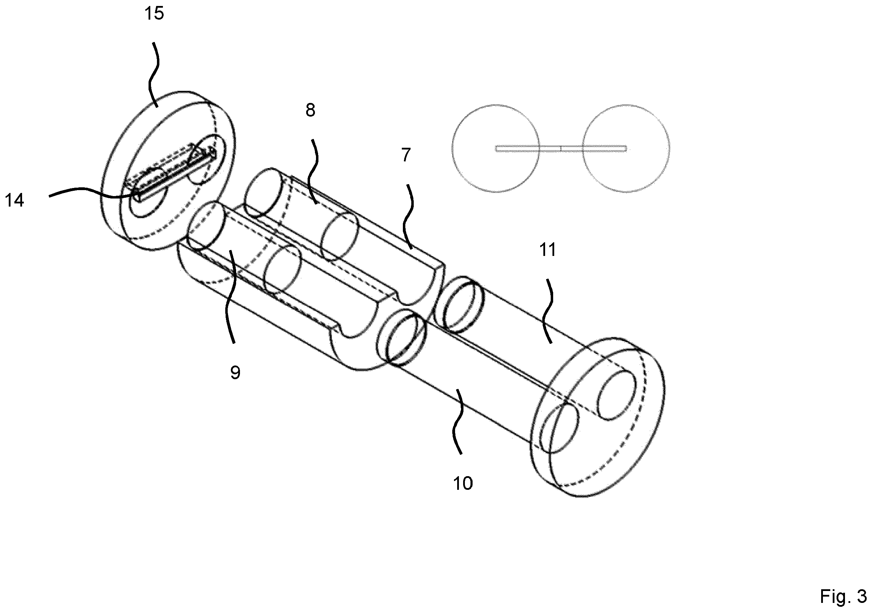

Fig. 3 zeigt eine schematische Darstellung von Elementen einer Anordnung für eine Strangpressvorrichtung, bei der der erste und der zweite Werkstoffbolzen 8, 9 mit gleicher Bolzenlänge gebildet sind. Auch weisen die erste und die zweite Aufnehmerbohrung 5, 6 den gleichen Querschnitt auf. Beim Strangpressen kann dann vorgesehen sein, den ersten und den zweiten Pressstempel 10, 11 mit gleicher Vorschubgeschwindigkeit zu betreiben.

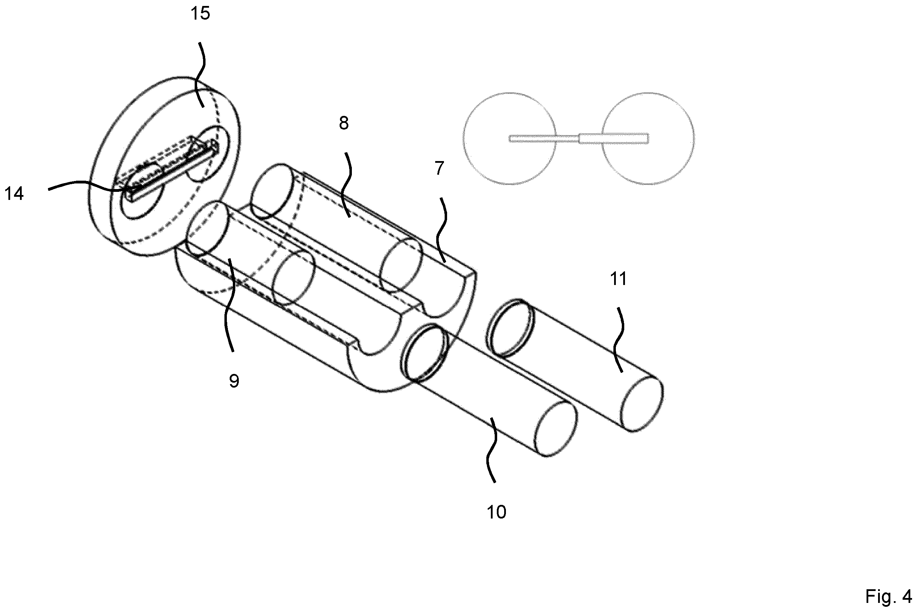

Im Unterschied zeigt Fig. 4 eine schematische Darstellung von Elementen für eine Anordnung einer Strangpressvorrichtung, bei der erste und der zweite Werkstoffbolzen 8, 9 mit unterschiedlicher Länge gebildet sind. Beim Strangpressen kann dann der erste Pressstempel 10 mit abweichender Vorschubgeschwindigkeit betrieben werden, als der zweite Pressstempel 11.

Um den Aufnehmer 7 und das Formwerkzeug 15 mit dem Formhohlraum 14 während des eigentlichen Strangpressvorgangs relativ zueinander zu positionieren, kann vorgesehen sein, am Aufnehmer 7 und am Formwerkzeug 15 einander zugeordnete konstruktive Elemente (nicht dargestellt) auszubilden. Beim Zusammenfügen von Aufnehmer 1 und Formwerkzeug 15, derart, dass der Formhohlraum 14 der ersten und der zweiten Aufnehmerbohrung 5, 6 gegenüberliegend angeordnet wird, werden Aufnehmer 1 und Formwerkzeug 15 relativ zueinander positioniert, indem ein Stift oder ein Bolzen (nicht dargestellt) in vorgesehene Aussparungen greifen oder auch sich Funktionsflächen zueinander ausrichten.

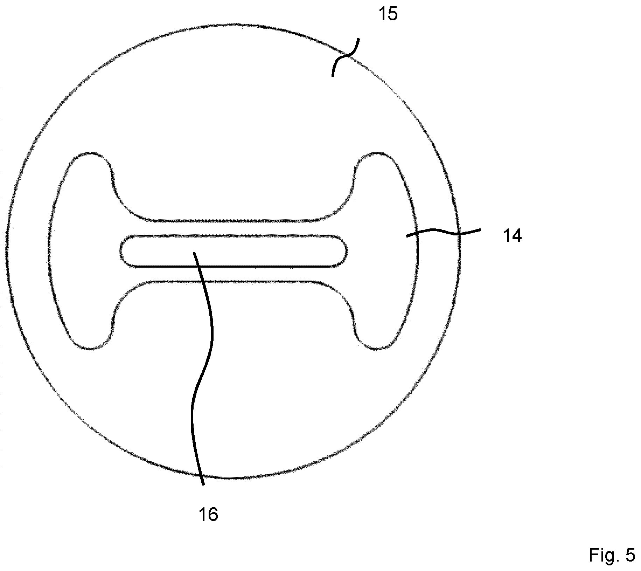

Fig. 5 zeigt eine schematische Darstellung einer Ausführung des Formwerkzeugs 15 von vorn. Das Pressprodukt verlässt im Betrieb beim Strangpressen den Formhohlraum 14 durch einen (Ausgang des) Presskanal(s) 16.

Nachfolgend werden Aspekte zu weiteren Ausführungsbeispielen erläutert.

Das Verfahren zum Hybridstrangpressen mittels des Mehrstempelsystems nutzt zum Beispiel die vorangehend erläuterte Zweifachstempel-Ausführung mit dem Mehrlochrezipienten oder -aufnehmer 7 mit den mindestens zwei Hohlräumen für die Aufnehmerbohrungen 5, 6 und der entsprechenden Anzahl individuell verfahrbarer und steuerbarer Pressstempel 10, 11. Das Formwerkzeug 15 (Strangpressmatrize) wird durch die getrennten Materialströme gespeist. Der Formhohlraum 14 stellt eine Schweißkammer bereit, um die Teilstränge der Werkstoffe durch Einwirkung von Druck und Temperatur zu fügen.

Die Pressstempel 10, 11 bewegen das Pressgut in den Werkstoffbolzen 8, 9 in Abhängigkeit von den individuellen Pressverhältnissen entweder gleich schnell oder mit unterschiedlichen Geschwindigkeiten in Richtung des Formwerkzeug 15. Die einzelnen Aufnehmerbohrungen 5, 6 und entsprechenden Pressscheiben müssen nicht dieselben Durchmesser aufweisen.

Bei dem Verfahren werden die Werkstoffbolzen 8, 9 vergleichbar mit dem direkten Strangpressen durch die Aufnehmerbohrungen 5, 6 hindurch in Richtung des Formwerkzeugs 15 (Matrize) bewegt. Hierbei können aufgrund der Relativbewegung zwischen den Innenwänden der Aufnehmerbohrungen 5, 6 und den Mantelflächen der Werkstoffbolzen 8, 9 bereits große Teile der Oxide und Verunreinigungen der Pressbolzen zurückgehalten werden. Die Materialströme, welche den Formhohlraum 14 speisen, sind bereits geschert und enthalten nur noch einen geringen Teil an Verunreinigungen. In den Formhohlraum 14 fließen Materialströme mit nahezu reinen metallischen Oberflächen ein. Diese werden in dem Formhohlraum 14 gefügt und treten als Verbundstrang (Strangpressprodukt 1) durch den Presskanal 16 aus dem Formwerkzeug 15 aus.

In Abhängigkeit der für die einzelnen Materialströme vorgesehenen individuellen Pressverhältnisse können die Stempelgeschwindigkeiten angepasst werden, sodass, entsprechend der Produktvorgabe, definierte Volumenanteile der einzelnen Verbundpartner im Produkt realisiert werden können. Gleichzeitig lässt sich durch die Festlegung der Volumenanteile eine definierte Positionierung der Grenzschicht beeinflussen.

Für den Fall des Pressens bei gleicher Geschwindigkeit beider Pressstempel 10, 11 sowie gleicher Querschnittsflächen der Aufnehmerbohrungen 5, 6 wird ein Profil gepresst, in dem die Verbundmaterialien mit gleichem Volumenstrom nebeneinander ausgepresst werden. Durch eine gezielt einstellbare individuelle Prozesstemperatur für die beiden Werkstoffbolzen 5, 6 können Verbundflachprofile sowohl aus Materialpaarungen mit geringen als auch mit großen Unterschieden im Umformwiderstand aus den jeweiligen Aufnehmerbohrungen 5, 6 hergestellt werden.

Für den Fall, dass beide Werkstoffe 2, 3 in unterschiedlich großen Volumenanteilen im Strangpressprodukt 1 vorliegen sollen, ergeben sich bei Beibehaltung der Aufnehmergeometrie für jeden Werkstoff (Hybridpartner) unterschiedliche Volumenströme. Dem wird durch Anpassung der Bolzenlänge in Verbindung mit zwei unterschiedlich schnell verfahrenden Pressstempeln Rechnung getragen. Dazu ist es erforderlich, dass sich beide Presstempel 10, 11 weggesteuert verfahren lassen. Um die Presstempel 10, 11 autark steuern zu können, kann die Strangpresse ein separates Hydrauliksystem für die Bewegung des Presstempel 10, 11 aufweisen.

In den beschriebenen Ausführungsformen können einzelne oder mehrere der folgenden Vorteile gegenüber bekannten Strangpressverfahren erreicht werden: Thermische und tribologische Entkopplung der Werkstoffpartner; Einstellbarkeit unterschiedlicher Bolzeneinsatztemperaturen; Separate Steuerung der Fließgeschwindigkeiten der Werkstoffpartner; individuelle Anpassung der erforderlichen Prozessvariablen; und gezielte Lenkung der Materialströme für variable Volumenverhältnisse (last- / funktionsangepasste Querschnitte).

Das Verfahren ermöglicht die Herstellung von metallischen Werkstoffverbunden innerhalb eines einzigen Massivumformschritts. Mittels Einsatz von separat steuerbaren Pressstempeln und der Möglichkeit, unterschiedliche Aufnehmerbohrungen (Stempelaufnahmen) zu realisieren, lässt sich das Fließen der Werkstoffpartner mit signifikant unterschiedlichen Fließspannungen derart einstellen, dass über der kompletten Profillänge des Strangpressprodukts 1 ein definierte Werkstoffanordnung (Volumenverhältnis der Werkstoffpartner bzw. Wandstärke der Werkstoffpartner, Ausbildung der Grenzschicht) einstellbar ist.

## Patentansprüche

1. Verfahren zum Herstellen eines Strangpressprodukts, mit
- Bereitstellen einer Strangpressvorrichtung, aufweisend
- einen Aufnehmer (7);
- eine erste Aufnehmerbohrung (5), die in dem Aufnehmer (7) gebildet und in der ein erster Pressstempel (10) angeordnet ist;
- eine zweite Aufnehmerbohrung (6), die in dem Aufnehmer (7) getrennt von der ersten Aufnehmerbohrung (5) gebildet und in der ein zweiter Pressstempel (11) angeordnet ist; und
- ein Formwerkzeug (15) mit einem Formhohlraum (14), welcher mit der ersten und der zweiten Aufnehmerbohrung (5, 6) verbunden sind;
- Anordnen eines ersten Werkstoffbolzens (8) aus einem ersten Werkstoff (2) in der ersten Aufnehmerbohrung (5);
- Anordnen eines zweiten Werkstoffbolzens (9) aus einem zweiten Werkstoff (3), welcher von dem ersten Werkstoff (2) verschieden ist, in der zweiten Aufnehmerbohrung (6); und
- Strangpressen eines Strangpressprodukts (1), bei dem der erste und der zweite Werkstoff (2, 3) form- und stoffschlüssig verbunden sind, Folgendes aufweisend:
- Vorschieben des ersten Pressstempels (10) in der ersten Aufnehmerbohrung (5), derart, dass hierdurch der erste Werkstoff (2) in den Formhohlraum (14) des Formwerkzeugs (15) gepresst und hierbei umgeformt wird;
- Vorschieben des zweiten Pressstempels (11) in der zweiten Aufnehmerbohrung (6), derart, dass hierdurch der zweite Werkstoff (3) in den Formhohlraum (14) des Formwerkzeugs (15) gepresst und hierbei umgeformt wird; und
- stoff- und formschlüssiges Verbinden des ersten und des zweiten Werkstoffs (2, 3) zu einem Strangpressprodukt (1) in dem Formwerkzeug (15),
**dadurch gekennzeichnet, dass** ein erster Vorschub beim Vorschieben des ersten Pressstempels (10) in der ersten Aufnehmerbohrung (5) und ein zweiter Vorschub beim Vorschieben des zweiten Pressstempels (11) in der zweiten Aufnehmerbohrung (6) unabhängig voneinander geregelt werden.

2. Verfahren nach Anspruch 1, **dadurch gekennzeichnet, dass** das stoff- und formschlüssige Verbinden in dem Formwerkzeug (15) zwischen dem ersten und dem zweiten Werkstoff (2, 3) ausgeführt wird.

3. Verfahren nach Anspruch 1 oder 2, **dadurch gekennzeichnet, dass** der erste und der zweite Werkstoff (2, 3) mit unterschiedlicher Fließgeschwindigkeit in dem Formhohlraum (14) eingebracht werden.

4. Verfahren nach mindestens einem der vorangehenden Ansprüche, **dadurch gekennzeichnet, dass** das Vorschieben des ersten Pressstempels (10) in der ersten Aufnehmerbohrung (5) mit einer ersten Vorschubgeschwindigkeit und das Vorschieben des zweiten Pressstempels (11) in der zweiten Aufnehmerbohrung (6) mit einer zweiten Vorschubgeschwindigkeit ausgeführt werden, die von der ersten Vorschubgeschwindigkeit verschieden ist.

5. Verfahren nach mindestens einem der vorangehenden Ansprüche, **dadurch gekennzeichnet, dass** der erste Pressstempel (10) beim Bewegen in der ersten Aufnehmerbohrung (5) mittels eines ersten Aktors und der zweite Pressstempel (11) beim Bewegen in der zweiten Aufnehmerbohrung (6) mittels eines zweiten Aktors angetrieben wird, welcher getrennt von dem ersten Aktor gebildet und steuerbar ist.

6. Verfahren nach mindestens einem der vorangehenden Ansprüche, **dadurch gekennzeichnet, dass** als Strangpressprodukt (1) ein Strangpressprofil hergestellt wird.

7. Verfahren nach mindestens einem der vorangehenden Ansprüche, **dadurch gekennzeichnet, dass** eine Strangpressvorrichtung bereitgestellt wird, bei der quer zur jeweiligen Vorschubrichtung die erste Aufnehmerbohrung (5) einen ersten Querschnitt und die zweite Aufnehmerbohrung (6) einen zweiten Querschnitt aufweist, welcher von dem ersten Querschnitt verschieden ist.

8. Verfahren nach mindestens einem der Ansprüche 1 bis 6, **dadurch gekennzeichnet, dass** eine Strangpressvorrichtung bereitgestellt wird, bei der quer zur jeweiligen Vorschubrichtung die erste Aufnehmerbohrung (5) den ersten Querschnitt und die zweite Aufnehmerbohrung (6) den zweiten Querschnitt aufweist, welcher gleich dem ersten Querschnitt ist.

9. Verfahren nach mindestens einem der vorangehenden Ansprüche, **dadurch gekennzeichnet, dass** eine Strangpressvorrichtung bereitgestellt wird, bei der quer zur jeweiligen Vorschubrichtung die erste Aufnehmerbohrung (5) einen ersten kreisrunden Querschnitt und die zweite Aufnehmerbohrung (6) einen zweiten kreisrunden Querschnitt aufweist.

10. Verfahren nach mindestens einem der vorangehenden Ansprüche, **dadurch gekennzeichnet, dass** eine Strangpressvorrichtung bereitgestellt wird, bei der die erste Aufnehmerbohrung (5) und die zweite Aufnehmerbohrung (6) gegeneinander abgedichtet sind.

## Claims

1. Method for producing an extruded product, comprising
- providing an extrusion device, comprising
- a receiver (7);
- a first receiver bore (5) which is formed in the receiver (7) and in which a first pressing punch (10) is arranged;
- a second receiver bore (6) which is formed in the receiver (7) separately from the first receiver bore (5) and in which a second pressing punch (11) is arranged; and
- a mould (15) with a mould cavity (14) which is connected to the first and the second receiver bore (5, 6);
- arranging a first material pin (8) of a first material (2) in the first receiver bore (5);
- arranging a second material pin (9) of a second material (3) which is different from the first material (2) in the second receiver bore (6); and
- extruding an extruded product (1) in which the first and the second material (2, 3) are connected in a form-fitting and material-locking manner, comprising:
- advancing the first pressing punch (10) in the first receiver bore (5) such that the first material (2) is thereby pressed into the mould cavity (14) of the mould (15) and is thereby formed;
- advancing the second pressing punch (11) in the second receiver bore (6) such that the second material (3) is thereby pressed into the mould cavity (14) of the mould (15) and is thereby formed; and
- connecting the first and the second material (2, 3) in a material-locking and form-fitting manner to form an extruded product (1) in the mould (15),
**characterized in that** a first advance when advancing the first pressing punch (10) in the first receiver bore (5) and a second advance when advancing the second pressing punch (11) in the second receiver bore (6) are controlled independently of one another.

2. Method according to Claim 1, **characterized in that** the material-locking and form-fitting connection is carried out in the mould (15) between the first and the second material (2, 3).

3. Method according to Claim 1 or 2, **characterized in that** the first and the second material (2, 3) are introduced into the mould cavity (14) at different flow rates.

4. Method according to at least one of the preceding claims, **characterized in that** the advancing of the first pressing punch (10) in the first receiver bore (5) is carried out at a first advance rate and the advancing of the second pressing punch (11) in the second receiver bore (6) is carried out at a second advance rate which is different from the first advance rate.

5. Method according to at least one of the preceding claims, **characterized in that** the first pressing punch (10) is driven during movement in the first receiver bore (5) by means of a first actuator and the second pressing punch (11) is driven during movement in the second receiver bore (6) by means of a second actuator which can be controlled and is formed separately from the first actuator.

6. Method according to at least one of the preceding claims, **characterized in that** an extruded profile is produced as the extruded product (1).

7. Method according to at least one of the preceding claims, **characterized in that** an extrusion device is provided in which, transversely to the respective advance direction, the first receiver bore (5) has a first cross section and the second receiver bore (6) has a second cross section which is different from the first cross section.

8. Method according to at least one of Claims 1 to 6, **characterized in that** an extrusion device is provided in which, transversely to the respective advance direction, the first receiver bore (5) has the first cross section and the second receiver bore (6) has the second cross section which is equal to the first cross section.

9. Method according to at least one of the preceding claims, **characterized in that** an extrusion device is provided in which, transversely to the respective advance direction, the first receiver bore (5) has a first circular cross section and the second receiver bore (6) has a second circular cross section.

10. Method according to at least one of the preceding claims, **characterized in that** an extrusion device is provided in which the first receiver bore (5) and the second receiver bore (6) are sealed off from one another.

## Revendications

1. Procédé, destiné à fabriquer un produit extrudé, comprenant
- la mise à disposition d'un dispositif d'extrusion, comportant
- un réceptacle (7) ;
- un premier alésage (5) de réceptacle, qui est conçu dans le réceptacle (7) et dans lequel est placé un premier piston de presse (10) ;
- un deuxième alésage (6) de réceptacle, qui est conçu dans le réceptacle (7), séparément du premier alésage (5) de réceptacle et dans lequel est placé un deuxième piston de presse (11) ; et
- un outil de formage (15), doté d'une cavité de formage (14), lequel est relié avec le premier et le deuxième alésages de réceptacle g (5, 6) ;
- le placement d'une première tige de matière (8) en une première matière (2), dans le premier alésage (5) de réceptacle ;
- le placement d'une deuxième tige de matière (9) en une deuxième matière (3), laquelle est différente de la première matière (2) dans le deuxième alésage (6) de réceptacle ; et
- l'extrusion d'un produit extrudé (1), lors de laquelle l'on assemble par complémentarité de forme et par conjugaison de matières la première et la deuxième matières (2, 3), comportant ce qui suit
- l'avancée du premier piston de presse (10) dans le premier alésage (5) de réceptacle, de sorte que de ce fait, la première matière (2) soit pressée dans la cavité de formage (14) de l'outil de formage (15) et soit déformée à cet effet ;
- l'avancée du deuxième piston de presse (11) dans le deuxième alésage (6) de réceptacle, de sorte que de ce fait, la deuxième matière (3) soit pressée dans la cavité de formage (14) de l'outil de formage (15) et soit déformée à cet effet ; et
- l'assemblage par conjugaison de matière et par complémentarité de forme de la première et de la deuxième matières (2, 3) en un produit extrudé (1) dans l'outil de formage (15),
**caractérisé en ce que** l'on règle indépendamment l'une de l'autre une première avance lors de l'avancée du premier piston de presse (10) dans le premier alésage (5) de réceptacle et une deuxième avance lors de l'avancée du deuxième piston de presse (11) dans le deuxième alésage (6) de réceptacle.

2. Procédé selon la revendication 1, **caractérisé en ce que** l'on procède à l'assemblage par conjugaison de matières et par complémentarité de forme dans l'outil de formage (15) entre la première et la deuxième matière (2, 3).

3. Procédé selon la revendication 1 ou 2, **caractérisé en ce que** l'on introduit la première et la deuxième matières (2, 3) avec une vitesse d'écoulement différente dans la cavité de formage (14).

4. Procédé selon au moins l'une quelconque des revendications précédentes, **caractérisé en ce que** l'on procède à l'avancée du premier piston de presse (10) dans le premier alésage (5) de réceptacle à une première vitesse d'avance et à l'avancée du deuxième piston de presse (11) dans le deuxième alésage (6) de réceptacle à une deuxième vitesse d'avance, qui est différente de la première vitesse d'avance.

5. Procédé selon au moins l'une quelconque des revendications précédentes, **caractérisé en ce que** lors du déplacement dans le premier alésage (5) de réceptacle, le premier piston de presse (10) est entrainé au moyen d'un premier actionneur et lors du déplacement dans le deuxième alésage (6) de réceptacle, le deuxième piston de presse (11) est entraîné au moyen d'un deuxième actionneur, lequel est conçu et susceptible d'être commandé séparément du premier actionneur.

6. Procédé selon au moins l'une quelconque des revendications précédentes, **caractérisé en ce que** l'on fabrique en tant que produit extrudé (1) un profilé extrudé.

7. Procédé selon au moins l'une quelconque des revendications précédentes, **caractérisé en ce que** l'on met à disposition un dispositif d'extrusion sur lequel à la transversale de la direction d'avance respective, le premier alésage (5) de réceptacle comporte une première section transversale et le deuxième alésage (6) de réceptacle comporte une deuxième section transversale, qui est différente de la première section transversale.

8. Procédé selon au moins l'une quelconque des revendications 1 à 6, **caractérisé en ce que** l'on met à disposition un dispositif d'extrusion sur lequel à la transversale de la direction d'avance respective, le premier alésage (5) de réceptacle comporte la première section transversale et le deuxième alésage (6) de réceptacle comporte la deuxième section transversale, laquelle est identique à la première section transversale.

9. Procédé selon au moins l'une quelconque des revendications précédentes, **caractérisé en ce que** l'on met à disposition un dispositif d'extrusion sur lequel à la transversale de la direction d'avance respective, le premier alésage (5) de réceptacle comporte une première section transversale circulaire et le deuxième alésage (6) de réceptacle comporte une deuxième section transversale circulaire.

10. Procédé selon au moins l'une quelconque des revendications précédentes, **caractérisé en ce que** l'on met à disposition un dispositif d'extrusion, sur lequel le premier alésage (5) de réceptacle et le deuxième alésage (6) de réceptacle sont étanchéifiés l'un par rapport à l'autre.
